Europäisches Patentamt

European Patent Office

Office européen des brevets

(19)

(11) Numéro de publication : **0 389 331 B1**

(12) **FASCICULE DE BREVET EUROPEEN**

(45) Date de publication du fascicule du brevet :
**28.07.93 Bulletin 93/30**

(51) Int. Cl.$^5$ : **C05G 3/00, B01J 2/30**

(21) Numéro de dépôt : **90400650.9**

(22) Date de dépôt : **13.03.90**

(54) **Compositions perfectionnées pour éviter la prise en masse des engrais.**

(30) Priorité : **22.03.89 FR 8903727**

(43) Date de publication de la demande :
**26.09.90 Bulletin 90/39**

(45) Mention de la délivrance du brevet :
**28.07.93 Bulletin 93/30**

(84) Etats contractants désignés :
**AT BE CH DE DK ES FR GB GR IT LI LU NL SE**

(56) Documents cités :
**DE-B- 1 075 642
FR-A- 2 126 427
FR-A- 2 289 471
GB-A- 876 675
GB-A- 1 042 797
US-A- 3 250 607**

(73) Titulaire : **CECA S.A.
4 - 8, Cours Michelet La Défense 10
F-92800 Puteaux (FR)**

(72) Inventeur : **Navascues, Luc Etienne André
31, rue Bayen
F-75017 Paris (FR)**
Inventeur : **Clamen, Guy Joseph Germain
34, rue de la Brèche
F-28000 Chartres (FR)**

(74) Mandataire : **Haicour, Philippe
ELF ATOCHEM S.A., D.P.I. 4-8, Cours Michelet
La Défense 10 - Cédex 42
F-92091 Paris La Defence (FR)**

EP 0 389 331 B1

Jouve, 18, rue Saint-Denis, 75001 PARIS

## Description

La présente invention se rapporte à des compositions perfectionnées pour le traitement des engrais chimiques granulés en vue d'éviter leur prise en masse au cours de leur stockage en vrac ou sous emballage.

On connaît la tendance des engrais chimiques, et plus particulièrement des ammonitrates et des engrais ternaires dits NPK à se prendre spontanément en masse, et depuis longtemps, on les traite avec des produits, dénommés agents antimottants, pour leur conserver la fluidité nécessaire à leur manipulation et à leur répandage.

Pour formuler de tels agents antimottants, on a fait appel, soit à des agents protecteurs agissant par action simplement mécanique ou physique, poudres minérales, cires, huiles naphténo-aromatiques, soit à des substances agissant par action physico-chimique, composés surfactants, non-ioniques, anioniques ou cationiques. Le plus souvent d'ailleurs, les compositions antimottantes associent ces divers types d'agents protecteurs.

Ces agents antimottants se présentent généralement sous deux formes qu'il convient de distinguer selon qu'on les applique sur l'engrais granulaire chaud, généralement dans un tambour enrobeur situé dans ce cas en amont du refroidisseur, ou - et c'est le cas le plus fréquent - sur l'engrais froid. On nomme les premiers fondants, pour indiquer qu'ils sont distribués sous une forme solide, généralement de granulés ou de paillettes, qui fond au contact de l'engrais chaud à la surface duquel ils forment une mince pellicule protectrice qui se fixe définitivement par refroidissement de l'engrais. On trouve ainsi décrits des mélanges de cires de polyéthylène-glycol et d'agents tensioactifs à chaînes hydrophobes dans le brevet français N° 2 126 427 (Hoechst); des mélanges de cires de polyéthylène et d'agents tensioactifs à chaînes hydrophobes dans le brevet français N° 2 032 706 (BASF); des compositions comprenant de 60 à 90% d'une charge minérale, de 5 à 20% d'un agent tensioactif, l'amine de suif hydrogéné étant préférée, et de 5 à 20% d'une cire ou d'une huile dans le brevet français N° 2 133 883 (Pierrefitte-Auby); de mélanges d'amines oxyéthylées avec des phosphates-esters; d'huile et de cire dans le brevet européen N° 113687 (Nederlandse Stickstof Mij); de mélanges d'amines grasses avec des alcools ou des phénols oxyéthylés, avec des cires et des poudres inorganiques dans le brevet européen N° 25780 (KenoGard); de mélanges d'amines ou de diamines grasses avec des acides gras et des amides gras, et avec des cires et des poudres inorganiques dans le brevet européen N° 48226 (KenoGard).

Les antimottants de seconde espèce sont dénommés enrobants. On distingue des enrobants liquides pulvérisables, comme par exemple les compositions liquides d'amines grasses et d'émulsions eau dans l'huile du brevet européen N° 81008 (AKZO), et les enrobants solides pulvérulents, par exemple les charges aminées, craies ou argiles finement broyées supportant environ 2,5% de mélanges actifs, nitriles gras ou carbamates de suif hydrogéné ou système nitriles gras / amines de suif hydrogéné / amine de suif hydrogéné oxyéthylée avec environ 11 molécules d'oxyde d'éthylène, du brevet français N° 1 314 559 (SPC AUBY), ou encore les solutions pulvérisables de mélange d'amines grasses et de sels d'ammonium quaternaire du brevet français N°2 351 695 (APC).

On trouve évidemment des compositions de type intermédiaire, pouvant être prises dans leur état pâteux ou pelletisé, pour addition dans des tambours enrobeurs sur un engrais chaud, ou fondues et pulvérisées sur un engrais tiède, voire froid. Ainsi les mélanges d'amines de suif ou de soja et de solvants (nitriles bruts correspondants) selon le brevet français N° 1 208 264 (Armour); les mélanges de cires fusibles et d'amines selon le brevet français N° 2 090 752 (Armour Hess); les compositions d'argile, de produit hydrofugeant à base d'amines grasses, d'alcool gras et d'huile paraffinique, sous forme de cire pelletisable fusible et pulvérisable selon le brevet français N° 2 350 872 (AGS + BMP).

Ce sont les agents surfactants du type cationique qui ont surtout retenu l'attention des chercheurs et des industriels, et parmi eux, les amines grasses qui se sont révélées être les produits les plus efficaces et partant les plus utilisés. On a presque toujours utilisé comme bases actives des formulations antimottantes des amines grasses industrielles à chaînes hydrocarbonées essentiellement saturées, répondant à la formule générale $RNH_2$, parfois les diamines de formule générale $R-NH-(CH_2)_n-NH_2$, et plus particulièrement du type alkylpropylène diamine (n=3), ainsi que leurs dérivés immédiats par alcoxylation ou quaternisation. Dans ces composés, R est défini comme un groupe hydrocarboné aliphatique comportant entre 12 et 24 atomes de carbone.

Ces amines trouvent leur origine dans l'amination, soit des oléfines, des alcools ou des aldéhydes de synthèse, soit, et c'est le cas le plus fréquent, des acides gras, selon les réactions bien connues que l'on résume ici pour mémoire:

Transformation de l'acide gras en nitrile :

$$R'- COOH + NH_3 \rightarrow R'- COO\ -NH_4 \rightarrow R' - CN + 2H_2O$$

Obtention de l'amine par hydrogénation catalytique du nitrile :

$$R'- CN + 2H_2 \rightarrow R - NH_2 \qquad \text{où } R - = R' - CH_2-$$

Eventuellement obtention de la diamine par cyanoéthylation et hydrogénation catalytique :

$$R - NH_2 + CH_2=CH-CN + 2H_2 \rightarrow R - NH - CH_2 - CH_2 - CH_2 - NH_2$$

Les acides gras qui servent de matière première sont très fréquemment des acides d'origine naturelle, et les amines préférées parmi celles que l'on obtient par cette voie industrielle sont celles qui sont issues des acides gras de suif ou de suif hydrogéné, de coprah, de soja, de colza. On préfère généralement pour l'antimottage des amines dont la répartition des chaînes hydrocarbonées est resserrée entre 16 et 20 atomes de carbone. Les amines que l'on rencontre le plus souvent pour régler les problèmes d'antimottage des engrais sont de fait les amines de suif, et plus particulièrement l'amine de suif hydrogéné.

Dans la formulation des compositions antimottantes à base d'amines, ce sont les amines ou diamines grasses qui constituent à l'évidence l'essentiel des constituants à forte activité physico-chimique. On peut les associer, comme le reflète la littérature évoquée plus haut, à divers composés organiques pour améliorer encore cette activité physico-chimique. D'autres ingrédients bien connus de l'homme de l'art entrent dans la formulation des antimottants industriels, notamment des cires et des huiles qui participent à la protection de l'engrais par effet physique, et des charges pulvérulentes qui contribuent à cette protection par effet mécanique, les huiles ayant en outre une fonction banale de solvant de la formule et les charges une fonction de support. Pour mieux situer ces formulations, on peut indiquer que les enrobants pulvérisables sont typiquement représentés par des compositions pâteuses-huiles à environ 20% d'amines et environ 80% d'huile, que les fondants sont typiquement représentés par des compositions, en gros par tiers, d'amines, de produits cireux et de charges minérales, et que les charges aminées sont des pulvérulents minéraux titrant de 1 à 5% d'amines. En résumé, les formulations antimottantes utiles sont des compositions titrant communément de 1 à 30% d'amines.

La distribution des chaînes hydrocarbonées selon le nombre de carbones dans la chaîne que l'on rencontre très généralement dans les amines industrielles, et partant dans les compositions antimottantes qui les renferment, est de ce fait celle des coupes naturelles que constituent les acides gras industriels. Elle est très caractéristique, en ce que d'une part la distribution des chaînes hydrocarbonées est assez étroite, et d'autre part en ce que les chaînes hydrocarbonées à nombre impair de carbones en sont pratiquement absentes. On trouvera ci-dessous, à titre indicatif, quelques données sur des compositions d'acides gras que l'on peut rencontrer dans le commerce.

| Chaîne | soja | poisson (hydro) | colza (hydro) | suif | coprah | palmiste |
|--------|------|------|------|------|------|------|
| C6 | – | – | – | – | traces | – |
| $C_{8/10}$ | – | – | – | – | 10-12% | – |
| $C_{12}$ | – | traces | – | traces | 42-48% | – |
| $C_{14}$ | 0-1% | 0-1% | 2-7% | env.3% | 16-18% | 1-2% |
| $C_{16}$ | 2-14% | 0-1% | 6-33% | 26-30% | 10-14% | 40-55% |
| $C_{16:1}$ | traces | – | – | traces | traces | – |
| $C_{18}$ | 3-6% | 4-45% | 20-51% | 19-27% | 3-6% | 6-9% |
| $C_{18:1}$ | 24-26% | – | – | 40-45% | 7-10% | 30-40% |
| $C_{18:2}$ | 48-52% | – | – | 1-6% | env.2% | 8-9% |
| $C_{18:3}$ | 5-8% | – | – | 0-1% | – | – |
| $C_{20}$ | 0-2% | 33-41% | 7-30% | 1-2% | – | – |
| $C_{22}$ | – | 19-55% | 4-40% | – | – | – |
| $C_{24}$ | – | 0-1% | 0-1% | – | – | – |

(Dans ce tableau, poisson (hydro) et colza (hydro) signifient respectivement acides gras de poisson hydrogénés et acides gras de colza hydrogénés. Une indication telle que $C_{18:2}$ signifie chaîne en $C_{18}$ doublement insaturée, en l'occurrence linoléique.)

On se rend compte aisément que les amines à chaînes hydrocarbonées saturées qui dériveront de tels acides auront une distribution en nombre de carbone très étroitement centrée, les amines de soja ou de nouveau colza (appauvri en $C_{20}$-$C_{22}$) hydrogénés sur l'octadécylamine, les amines de suif ou de palmiste hydrogénés sur l'hexadécylamine/octadécylamine, l'amine dérivant du colza "haut érucique" sur la coupe $C_{18}/C_{22}$.

La demanderesse, qui se préoccupait de trouver des compositions antimottantes nettement plus efficaces que celle de l'art antérieur, a trouvé que de façon très surprenante qu'un tel résultat pouvait être atteint en utilisant pour la formulation des agents antimottants, des amines grasses dont la répartition des chaînes hydrocarbonées était sensiblement plus étalée que celle des acides gras naturels.

On définit commodément cette répartition des chaînes en l'assimilant à une distribution gaussienne des

3

pourcentages pondéraux en fonction de la longueur de la chaîne exprimée en nombre d'atomes de carbone. On calcule ainsi une longueur moyenne de chaîne et un écart-type autour de cette moyenne, en utilisant les méthodes connues d'ajustement par moindres carrés de la distribution expérimentale sur une courbe de Gauss de même valeur moyenne.

On a trouvé, et c'est en cela que réside l'invention, que les amines grasses dont la répartition de chaînes hydrocarbonées présentaient un écart-type supérieur ou égal à 2, lorsque la valeur moyenne de la longueur de chaîne est centrée sur 17,5 +/- 1,5 atomes de carbone étaient particulièrement efficaces pour réaliser des compositions, qui appliquées aux engrais granulaires leur confèrent une résistance satisfaisante à l'autoagglomération.

Selon ce critère, les amines grasses issues d'acides gras d'origine naturelle dont la longueur de chaîne est centrée sur 17,5 atomes de carbone, se caractérisent par des écarts-types voisins de 1. On obtient selon l'invention des compositions aminées beaucoup plus performantes en mélangeant des amines grasses commerciales de telle façon que leur écart-type se situe à des valeurs supérieures ou égales à 2.

Pour des raisons tenant, entre autres, à l'optimisation des propriétés physiques des antimottants, les compositions aminées propres à l'antimottage des engrais sont avantageusement des mélanges centrés sur 17,5 atomes de carbone que l'on peut réaliser très aisément par mélanges d'amines industriellement disponibles de façon à réunir les critères retenus pour la définition des produits selon l'invention. Les compositions aminées selon l'invention sont des mélanges d'amines grasses de même nature. Il n'est pas question de limiter l'invention à des mélanges dont la répartition des chaînes est strictement gaussienne. Mais il est sensible à tout homme du métier que des compositions qui s'en écartent de façon extravagante, et qui ne seraient conçues que dans le but de réaliser au sens purement mathématique la condition de longueur de chaîne moyenne et d'écart-type indiquée comme caractéristique, ne font pas partie de l'invention. Il en serait ainsi de mélanges, par exemple d'amines en $C_{10}$-$C_{12}$ et d'amines en $C_{22}$, qui échappent à une définition raisonnable de l'invention, alors que des mélanges d'amine de suif hydrogéné pour 35 à 85% , d'amine de coprah pour 5 à 25% , et d'amine de colza ou de poisson, pour 10 à 40% , en font évidemment partie; ce que l'expérimentation en laboratoire confirme aisément. Sur ce point, de tels mélanges ternaires d'amines issues d'acide gras naturels dont les chaînes sont centrées respectivement sur environ 12, 18 et 20-22 carbones constituent sans aucun doute le meilleur mode de réalisation de l'invention. Analytiquement, ces mélanges sont caractérisés, outre leur répartition moyenne de chaînes autour de 17,5 carbones, par une teneur d'au moins 5% en amines dont les chaînes ont plus de 14 atomes de carbones, et d'au moins 5% en amines dont les chaînes ont plus de 20 atomes de carbone.

Des sélections d'amines selon l'invention peuvent également être trouvées dans des amines grasses résultant de l'amination d'acides gras ne provenant pas de triglycérides naturels.

On produit des acides gras de synthèse par oxydation catalytique sur sels de manganèse en phase gazeuse vers 130°C de paraffines normales à 20-30 atomes de carbone. La scission oxydante ainsi réalisée produit des acides carboxyliques de $C_1$ à $C_{30}$, avec une proportion relativement élevée d'acides en $C_{12}$/$C_{18}$, dans lesquels, à l'opposé des acides gras naturels, on trouve toutes les longueurs de chaînes hydrocarbonées, paires comme impaires. Ce sont en général des produits colorés et d'odeur forte, ce qui en limite beaucoup les emplois. Ces acides gras sont transformables en amines selon les méthodes habituelles, amines auxquelles ils communiquent leur couleur et leur odeur prononcées, ce qui en a jusqu'ici beaucoup limité les applications. Des amines obtenues à partir de coupes $C_9$/$C_{27}$ de tels acides se caractérisent selon la méthode proposée par la demanderesse par une longueur moyenne de chaîne d'environ 19 et un écart-type de 3,0 .

Les exemples qui suivent feront mieux comprendre l'invention. Dans ces exemples on évalue l'activité des formules réalisées à partir des amines selon l'invention grâce à des tests comparatifs sur engrais bruts et engrais traités qui sont bien connues de l'homme de l'art.

Dans l'industrie, on procède à l'examen des engrais stockés pendant des durées et dans les conditions qui sont celles-là mêmes du stockage industriel des engrais, à savoir mise en sacs de 50 kg, empilage par piles de 25 sacs au moins, et abandon dans les hangars de stockage durant 3 mois. Pour estimer le comportement de l'engrais, et partant, la qualité du traitement antimottant qui lui a été appliqué, on procède au démontage des piles de sacs. Chaque sac est ouvert avec précaution, et on en glisse le contenu sur une grille. On note le poids d'engrais aggloméré retenu sur le tamis, son aspect, la friabilité des blocs, etc...

En laboratoire, on procède à des essais accélérés grâce auxquels on estime la valeur du traitement de l'engrais par un pourcentage de protection ou un indice de mottage. Le mode d'essai, qui est décrit ci-après, fournit un classement qui est fidèlement en corrélation avec celui des essais de type industriel.

Le mode d'essai en laboratoire consiste à conditionner les granulés d'engrais par exposition plus ou moins prolongée à une atmosphère d'humidité relative supérieure à l'humidité relative critique de l'engrais pendant des durées variables, puis à en former par compression statique des éprouvettes cylindriques dont on mesure le niveau de cohésion correspondant à une densité apparente donnée.

a) Conditionnement.

Le conditionnement de l'engrais est effectué dans les conditions suivantes :
. Température         18°C
. Humidité relative        73%
. Durée        0 à 1 heure.

b) Confection des éprouvettes.

Les éprouvettes sont confectionnées avec 140 g d'engrais, dans des moules dont le diamètre est de 5 cm. Les conditions de leur fabrication sont les suivantes:

| Type d'engrais | Pression de moulage (bars) | Durée de compression (heures) |
|---|---|---|
| Ammonitrate | 10 | 16 |
| NPK | 5 | 16 |

c) Mesures.

La susceptibilité de la fonction linéaire reliant le niveau de cohésion à la densité apparente des éprouvettes caractérisé d'une façon générale la tendance au mottage de l'engrais. On la dénomme indice relatif de mottage (IRM). L'indice relatif de mottage sert de mesure pour la détermination du degré d'efficacité d'un traitement d'antimottage.

L'indice relatif de mottage est défini par la relation:

$$IRM = \delta R/\delta d$$

où
. d est la densité apparente de l'éprouvette;
. R est sa résistance à la rupture.

La densité apparente (d) est déterminée à partir de la mesure de la hauteur de l'éprouvette cylindrique dont le diamètre constant est connu.

La cohésion (R) est prise comme la résistance à la rupture en traction, obtenue elle-même à partir de la mesure de la résistance à la compression diamétrale, d'après la relation:

$$R = 2.F / \pi.(\Phi.h),$$

où
. F est la force de compression à la rupture appliquée,
. h est la hauteur de l'éprouvette,
. $\Phi$ est le diamètre de l'éprouvette.

Les mesures de résistance à la compression sont effectuées à l'aide d'un dynamomètre, à la vitesse d'avancement de 30 mm/min.

d) Interprétation des résultats.

La comparaison entre l'indice relatif de mottage de l'engrais témoin non traité ($IRM_o$) et l'indice relatif de mottage de l'engrais traité (IRM) se fait selon la formule :

$$P(\%) = 100 (1 - IRM/IRM_o)$$

qui permet de mesurer le niveau de protection apportée par le traitement d'antimottage selon un pourcentage de protection P(%).

EXEMPLE 1

L'engrais utilisé ici est un ammonitrate prillé titrant 33,5% d'azote total. L'agent de traitement est une composition qui comporte:

EP 0 389 331 B1

- amine grasse :        20%
- huile :        80%

De telles compositions se présentent sous l'aspect de mélanges pâteux à température ambiante, mais liquides, homogènes et de faible viscosité (10 à 20 mPa.s) à la température d'application, soit 80 à 90°C. Elles appartiennent à la catégorie des enrobants; on les utilise communément aux doses de 1 à 1,5 Kg/tonne d'engrais.

Selon le test de laboratoire décrit plus haut, on compare une composition selon l'art antérieur $A_1$ dans laquelle l'amine grasse est une amine de suif hydrogéné qui, avec une répartition de chaînes de:

chaînes en $C_{14}$ : 2%
chaînes en $C_{16}$ : 28%
chaînes en $C_{18}$ : 70%

est caractérisée par une longueur moyenne de chaîne de 17,4 carbones, et un écart-type de 0,9,
à une composition $A_2$ dans laquelle l'amine grasse est une amine aliphatique primaire en $C_{10}$ - $C_{24}$, que l'on obtient par mélange d'amine de coprah pour 6,7%, d'amine de suif hydrogéné pour 80%, et d'amine obtenue à partir d'acides gras hydrogénés de poissons pour 13,3%. Cette composition aminée, avec la répartition de chaînes suivante :

chaînes en $C_{10}$ : 0,7%
chaînes en $C_{12}$ : 3,5%
chaînes en $C_{14}$ : 2,2%
chaînes en $C_{16}$ : 24,4%
chaînes en $C_{18}$ : 59,7%
chaînes en $C_{20}$ : 4,3%
chaînes en $C_{22}$ : 4,9%
chaînes en $C_{24}$ : 0,3%

est caractérisée par une longueur moyenne de chaîne de 17,5 carbones et un écart-type de 2.

Dans les deux cas, la quantité d'agent antimottant utilisée est de 1,0+/- 0,1 kg/t.

On obtient les résultats suivants, qui mettent en évidence l'avantage substantiel du traitement à l'aide du produit selon l'invention:

| Ammonitrate | Indice de mottage IRM | Protection P(%) |
|---|---|---|
| Témoin | 10,5 | - |
| Traitement $A_1$ | 4,0 | 62 |
| Traitement $A_2$ | 2,1 | 80 |

EXEMPLE 2

L'agent de traitement est ici une composition formulée à partir des composants suivants :
amine grasse : 15%
acide gras : 5%
cire : 10%
huile : 70%

Selon le test de laboratoire décrit plus haut, on compare une composition $A_3$ selon l'art antérieur, dans laquelle l'amine grasse est une amine de suif hydrogéné, avec la répartition de chaînes déjà rencontrée dans l'exemple 1, à savoir :

chaînes en $C_{14}$ : 2%
chaînes en $C_{16}$ : 28%
chaînes en $C_{18}$ : 71%

la longueur moyenne de chaîne étant de 17,4 carbones avec un écart-type de 0,9,

6

à une composition $A_4$ selon l'invention, dans laquelle l'amine grasse est un mélange d'amines primaires à chaînes aliphatiques linéaires saturées, de longueur de chaîne d'étendue $C_{10}$ - $C_{24}$, que l'on obtient par mélange d'amine de coprah pour 13,0% , d'amine de suif hydrogéné pour 61,0% , et d'amine de poisson pour 26,0% . Cette composition, avec la répartition de chaînes suivante :

chaînes en $C_{10}$ : 0,8%
chaînes en $C_{12}$ : 7,2%
chaînes en $C_{14}$ : 3,6%
chaînes en $C_{16}$ : 21,0%
chaînes en $C_{18}$ : 49,0%
chaînes en $C_{20}$ : 8,3%
chaînes en $C_{22}$ : 9,6%
chaînes en $C_{24}$ : 0,5%

est caractérisée par une longueur moyenne de 17,5 carbones, et un écart-type de 2,5.

La quantité d'agent antimottant utilisée est de 1,0 +/- 0,1 Kg/T.

On obtient, avec le même engrais que dans l'exemple 1, les résultats suivants:

| Ammonitrate | Indice de mottage IRM | Protection P(%) |
|---|---|---|
| Témoin | 11,2 | - |
| Traitement $A_3$ | 2,1 | 81 |
| Traitement $A_4$ | 0,3 | 97 |

EXEMPLE 3

L'agent de traitement est ici une composition qui comporte :
amine grasse : 20%
huile : 70%
cire : 10%

Selon le test de laboratoire décrit plus haut, on compare une composition $A_5$ selon l'art antérieur, dans laquelle l'amine grasse est l'amine de suif hydrogéné des exemples 1 et 2, à une composition $A_6$ selon l'invention, dans laquelle l'amine grasse est une amine dérivée d'acides gras synthétiques d'étendue $C_9$ - $C_{27}$, centrée sur 19 carbones, avec un écart-type égal à 3, dont la répartition de chaînes est la suivante :

chaînes en $C_9$ : 0,1%
chaînes en $C_{10}$ : 0,3%
chaînes en $C_{11}$ : 0,7%
chaînes en $C_{12}$ : 1,3%
chaînes en $C_{13}$ : 2,4%
chaînes en $C_{14}$ : 3,6%
chaînes en $C_{15}$ : 4,9%
chaînes en $C_{16}$ : 6,4%
chaînes en $C_{17}$ : 8,3%
chaînes en $C_{18}$ : 11,1%
chaînes en $C_{19}$ : 13,3%
chaînes en $C_{20}$ : 14,0%
chaînes en $C_{21}$ : 12,3%
chaînes en $C_{22}$ : 9,6%
chaînes en $C_{23}$ : 6,0%
chaînes en $C_{24}$ : 3,3%
chaînes en $C_{25}$ : 1,5%
chaînes en $C_{26}$ : 0,6%

chaînes en $C_{27}$ : 0,1%

La quantité d'agent antimottant utilisée est de 1,0 +/- 0,1 Kg/T.

On obtient les résultats suivants :

| Ammonitrate | Indice de mottage IRM | Protection P(%) |
|---|---|---|
| Témoin | 9,7 | - |
| Traitement $A_5$ | 2,9 | 70 |
| Traitement $A_6$ | 1,3 | 87 |

EXEMPLE 4

L'exemple porte sur le traitement d'un ammonitrate granulé à 28% d'azote.

L'agent de traitement est ici une composition qui comporte :

amine grasse : 25%

huile : 70%

cire : 5%

Il est utilisé à la dose de 1,0 Kg/T.

La formulation selon l'art antérieur est une composition $A_7$ dans laquelle l'amine grasse est l'amine de suif hydrogéné des exemples 1, 2 et 3.

La formulation selon l'invention est une composition $A_8$ à base d'amines primaires à chaînes aliphatiques linéaires saturées, de longueur de chaîne d'étendue $C_8$ - $C_{24}$, que l'on obtient par mélange d'amines de coprah pour 20% , d'amines de suif hydrogéné pour 64% , et d'amines de poisson pour 16% . Cette composition, avec la répartition de chaînes suivante :

chaînes en $C_8$ : 0,4%

chaînes en $C_{10}$ : 1,2%

chaînes en $C_{12}$ : 11,0%

chaînes en $C_{14}$ : 5,0%

chaînes en $C_{16}$ : 21,3%

chaînes en $C_{18}$ : 49,5%

chaînes en $C_{20}$ : 5,2%

chaînes en $C_{22}$ : 6,1%

chaînes en $C_{24}$ : 0,3%

est caractérisée par une longueur moyenne de chaînes de 17,0 carbones, et un écart-type de 2,6.

On obtient les résultats suivants :

| Ammonitrate | Indice de mottage IRM | Protection P(%) |
|---|---|---|
| Témoin | 11,6 | - |
| Traitement $A_7$ | 2,7 | 77 |
| Traitement $A_8$ | 0,8 | 93 |

EXEMPLE 5

L'exemple porte sur le traitement d'un engrais ternaire NPK (17% d'azote total, 17% de $K_2O$, 17% de $P_2O_5$) granulé.

L'agent de traitement est ici un mélange :

  amines grasses : 20%

  huile : 60%

  cire : 20%

utilisé à la dose de 1,3 Kg/T.

La formulation $A_9$ selon l'art antérieur comporte comme amine grasse, l'amine de suif hydrogéné déjà utilisée dans les exemples 1 à 4.

La formulation selon l'invention est une composition $A_{10}$ à base d'amines primaires à chaînes aliphatiques linéaires saturées, de longueur de chaînes d'étendue $C_8$ - $C_{24}$, que l'on obtient par mélange d'amines de coprah pour 10% , d'amines de suif hydrogéné pour 68% , et d'amines de poisson pour 22% . Cette composition, avec la répartition de chaînes suivante :

  chaînes en $C_8$ : 0,2%

  chaînes en $C_{10}$ : 0,6%

  chaînes en $C_{12}$ : 5,7%

  chaînes en $C_{14}$ : 3,1%

  chaînes en $C_{16}$ : 22,1%

  chaînes en $C_{18}$ : 52,8%

  chaînes en $C_{20}$ : 7,0%

  chaînes en $C_{22}$ : 8,1%

  chaînes en $C_{24}$ : 0,4%

est caractérisée par une longueur moyenne de chaînes de 17,5 carbones, et un écart-type de 2,3.

On obtient les résultats suivants :

| NPK | Indice de mottage IRM | Protection P(%) |
|---|---|---|
| Témoin | 8,5 | – |
| Traitement $A_9$ | 2,6 | 69 |
| Traitement $A_{10}$ | 0,6 | 93 |

Ces résultats attestent également de la supériorité des compositions selon l'invention.

## Revendications

1.  Compositions destinées à l'antimottage des engrais granulaires, comportant de 1 à 30% d'amines grasses dont les longueurs de chaînes hydrocarbonées sont comprises entre 9 et 27 atomes de carbone, caractérisées en ce que la répartition des longueurs de chaînes hydrocarbonées des amines grasses est telle que sa moyenne a une valeur de 17,5 +/- 1,5 carbones et que son écart-type est supérieur ou égal à 2.

2.  Compositions selon la revendication 1, caractérisées en ce que les amines grasses résultent du mélange d'amine de suif hydrogéné pour 35 à 85% , d'amine de coprah pour 5 à 25% , et d'amine de colza ou de poisson pour 10 à 40% .

3.  Compositions selon la revendication 1, dont les amines grasses sont des mélanges d'amines issues d'acides gras naturels caractérisés en ce qu'ils contiennent au moins 5% d'amines dont les chaînes ont plus de 14 atomes de carbones, et au moins 5% d'amines dont les chaînes ont plus de 20 atomes de carbone.

4.  Compositions selon la revendication 1, caractérisées en ce que les amines grasses sont des amines obtenues par amination d'acides $C_9$ à $C_{27}$ provenant de l'oxydation de normales paraffines.

**Patentansprüche**

1. Verbindungen, die zur Verhinderung von Klumpenbildung in granulierten Düngemitteln bestimmt sind, und die aus 1 bis 30 % Fettaminen bestehen, deren Kohlenwasserstoffkettenlängen zwischen 10 und 27 Kohlenstoffatome betragen, dadurch gekennzeichnet, daß die Kohlenwasserstoffkettenlängenverteilung dergestalt ist, daß ihr Mittelwert bei 17,5 +/- 1,5 Kohlenstoffatomen liegt, und ihr Abstandstyp gleich oder größer 2 ist.

2. Verbindungen nach Anspruch 1, dadurch gekennzeichnet, daß die Fettamine zu 35 - 85 % aus einer Mischung von hydriertem Talgamin, zu 5 - 25 % aus Aminen der Kopra und zu 10 - 40 % aus Aminen des Raps- oder Fischöls stammen.

3. Verbindungen nach Anspruch 1, deren Fettamine Aminmischungen sind, die aus natürlichen Fettsäuren hervorgehen, dadurch gekennzeichnet, daß sie mindestens 5 % Amine enthalten, deren Ketten mehr als 14 Kohlenstoffatome haben und mindestens 5 % Amine, deren Ketten mehr als 20 Kohlenstoffatome haben, enthalten.

4. Verbindungen nach Anspruch 1, dadurch gekennzeichnet, daß die Fettamine durch Aminierung von $C_9$ - $C_{27}$-Säuren hergestellt wurden, die durch Oxidation von geradkettigen Paraffinen gewonnen wurden.

**Claims**

1. Compositions intended for preventing the caking of granular fertilisers, containing from 1 to 30% of fatty amines whose hydrocarbon chain lengths are between 9 and 27 carbon atoms, characterised in that the distribution of the hydrocarbon chain lengths of the fatty amines is such that it has a mean value of 17.5 +/- 1.5 carbons and in that its standard deviation is greater than or equal to 2.

2. Compositions according to Claim 1, characterised in that the fatty amines result from the mixture of hydrogenated tallow amine for 35 to 85%, of copra amine for 5 to 25%, and of colza or fish amine for 10 to 40%.

3. Compositions according to Claim 1, whose fatty amines are mixtures of amines derived from natural fatty acids characterised in that they contain at least 5% of amines whose chains have more than 14 carbon atoms, and at least 5% of amines whose chains have more than 20 carbon atoms.

4. Compositions according to Claim 1, characterised in that the fatty amines are amines obtained by amination of $C_9$ to $C_{27}$ acids obtained from the oxidation of normal paraffins.